# EUROPEAN PATENT APPLICATION

(11) **EP 1 109 108 A1**
(43) Date of publication of application: **20.06.2001**
(21) Application number: 99124949.1
(22) Date of filing: 14.12.1999
(51) Int. Cl.: G06F 17/24

(54) **Method of generating a formatted index document**

(71) Applicant: SUN MICROSYSTEMS, INC., Palo Alto, California 94303 (US)
(72) Inventor: Breuer, Matthias, 21220 Seevetal (DE)
(74) Representative: Betten & Resch

(57) **Abstract**

A method of interactively generating computer readable instruction set including instruction symbols and related variables comprises the steps of:
a) generating a signal for displaying a list of selectable instruction symbols,
b) arranging a selected instruction symbol to form part of the instruction set,
c) generating a signal for displaying a list of selectable variable values, if at least one variable relates to the selected instruction symbol,
d) arranging a selected variable value to form part of the instruction set,
e) repeating steps a) to d) until the instruction set is completed.

## Description

### FIELD OF THE INVENTION

The present invention relates to interactively generating a computer readable instruction set comprising instruction symbols and related variables.

### DESCRIPTION OF THE RELATED ART

For many documents created on a computer like text documents, HTML documents, presentations and others related index documents are a useful help for the user of the document in order to find desired content or get information about bibliographic sources or the like. Index documents include a table of contents, a headword index, figure or table index as well as a bibliographic index. Creating such an index document involves a lot of formatting work and is therefore time consuming and costly. Index documents consist of a plurality of index lines having a specific content and format. In a table of contents of a book, for example, there exist index lines for different hierarchical levels of headings, i.e. main heading, subheading etc. It is known to define the content and format of a document line using a string of instruction symbols (tokens) and attributes associated with the tokens. In the following an example of a token string with corresponding attributes (in parenthesis) is provided for an index line of a table of contents:
chapter number **CH** (character style); entry text **ET** (style template); tabulator **TAB** (type, filling character, position); page number **PN** (character style).

Hereby the chapter number is represented by a numerical value, e.g. 1, 1.1, 1.3.5, the text is the text of the heading in the style as defined by the attribute style template, the filling character can be e.g. a blank character or a dot to fill the empty space from the text to the page number. The tabulator has two attributes, i.e. the tabulator type (centred, left, right) and a distance measured in mm, inches or any other suitable unity. In most cases the page number is positioned at the right side of the index line.

It is known to either input the token string directly by typing the instruction symbols and attribute values or using a user interactive menu dialog. These two methods are complicated and time consuming for the user. Furthermore, the problem arises that the syntax of tokens and attributes may be input wrongly. Arranging the tokens to define an order is particularly difficult to handle because tokens could be entered inside another token. Therefore, the program has to check the syntax of the inputted token string every time and if the syntax is wrong the token string has to be corrected by the user.

Besides index documents other instruction sets, for example defining a modem interface, may have to be input into a computer with correct syntax.

It is therefore an object of the present invention to facilitate the generation of computer readable instruction sets.

### SUMMARY OF THE INVENTION

According to the present invention a method of interactively generating a computer readable instruction set having instruction symbols and related variables is provided, comprising the method steps of:
a) generating a signal for displaying a list of selectable instruction symbols,
b) arranging a selected instruction symbol to form part of the instruction set,
c) generating a signal for displaying a list of selectable variable values, if at least one variable relates to the selected instruction symbol,
d) arranging a selected variable value to form part of the instruction set,
e) repeating steps a) to d) until the instruction set is completed.

The instruction set may preferably define a formatted index document or data base relating to an arbitrary other document.

The method may further comprise the steps of: selecting an index type out of a predetermined list of index types, selecting an index line type out of a displayed list of index line types dependent on the selected index type, providing for every index line a string of instruction symbols dependent on a selected index type and index line type, and selecting for those instruction symbols to which attributes are assigned attribute values out of a predetermined list of attribute values.

The method according to the present invention allows the user to easily and conveniently generate an instruction set having a correct instruction syntax.

With some index types, e.g. a table of contents, the index line types represent different levels in a hierarchical order within the index document.

With other index types, e.g. bibliographic index, the different index line types represent different types of sources of bibliographic information like books, journals, web-pages and the like.

The attributes may include style templates, character styles or tabulator positions.

A set of instruction symbols within an index line may represent a link or hyperlink to another document.

The index document may be assigned to a document presently opened in the computer or a defined portion thereof as for example a chapter or paragraph.

According to another implementation the present invention provides a computer program for interactively generating a computer readable instruction set comprising instruction symbols and related variables, the method comprising:
a) generating a signal for displaying a list of selectable instruction symbols,
b) arranging a selected instruction symbol to form part of the instruction set,
c) generating a signal for displaying a list of selectable variable values, if at least one variable relates to the selected instruction symbol,
d) arranging a selected variable value to form part of the instruction set, and
e) repeating steps a) to d) until the instruction set is completed.

A program code may be embodied in any form of a computer program product. A computer program product comprises a medium configured to store or transport computer readable code, or in which computer readable code may be embedded. Some example of computer program products are CD-ROM discs, ROM cards, floppy discs, magnetic tapes, computer hard drives, servers on a network and signals transmitted over a network representing computer readable program code.

According to a still further implementation the present invention provides an apparatus for interactively generating a computer readable instruction set comprising instruction symbols and related variables, the apparatus comprising:
a unit for generating display signals for displaying a list of selectable instruction symbols, a unit for generating display signals for displaying a list of selectable variable values corresponding to instruction symbols to which at least one variable is assigned, a processing unit for arranging a plurality of selected instruction symbols and selected variable values such as to form the instruction set having a valid instruction syntax.

The great advantage and utility of the present invention is that creation and formatting of an instruction set is facilitated. Furthermore, syntax errors in the instruction variable structure can effectively be avoided.

The above mentioned and other features, utilities and advantages of the present invention will be apparent from the following detailed description of preferred embodiments of the present invention as illustrated in the accompanying drawings.

### BRIEF DESCRIPTION OF THE DRAWINGS

Figure 1 is a flow chart schematically illustrating an embodiment of the present invention.

Figure 2 is an illustrative example of an index as created with the present invention.

Figure 3 is a schematic illustration showing an exemplary dialog window display on a display screen according to an embodiment of the present invention.

Figure 4 is a schematic illustration of a dialog window displayed on a computer display screen according to another embodiment of the present invention.

Figure 5 is a schematic illustration of a computer system to which the present invention may be applied.

Figure 6 is a schematic illustration of a client-server configuration to which the present invention may also be applied.

### DETAILED DESCRIPTION OF PREFERRED EMBODIMENTS

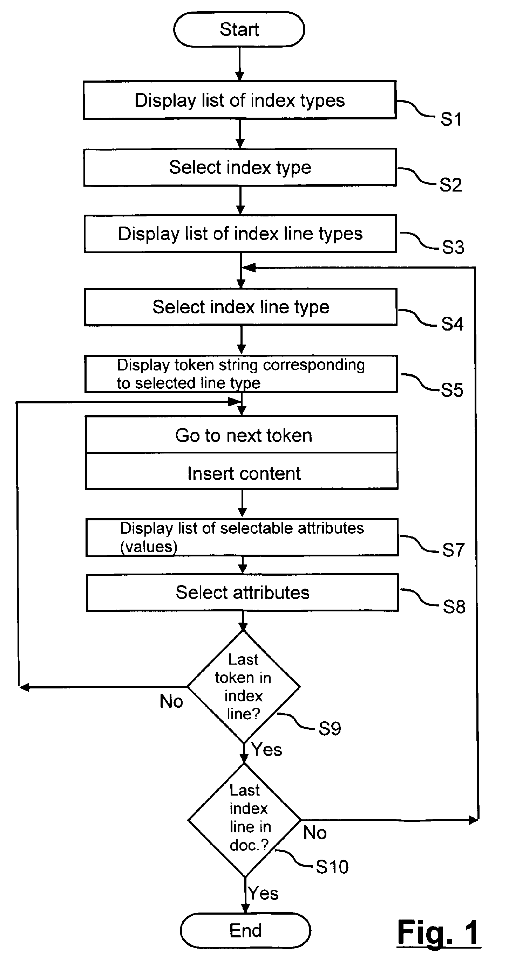

Figure 1 is a flow chart schematically illustrating a preferred embodiment of the present invention. In step S1 the list of index types which can be created with the method according to the present embodiment are displayed on a display screen (preferably in a dialog window). The list of index types to be created may comprise e.g. a table of contents, indexes for illustrations, tables, objects, headwords or bibliographic data.

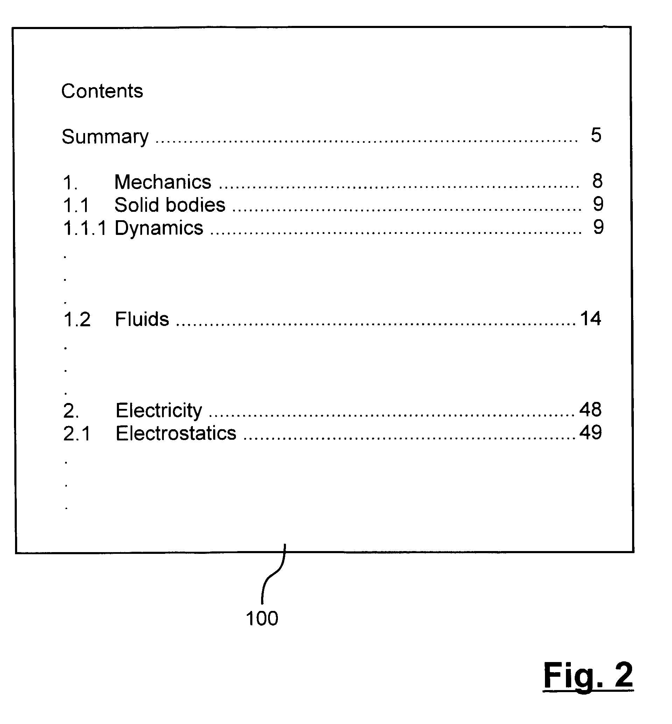

Figure 2 shows as an example of an index document 100 a table of contents of a textbook. The index document comprises a plurality of index lines, which have different functions and are formatted differently. Although the word index line is used here, it is to be understood that an index line in the sense of the present embodiment can actually comprise two or more lines of text forming a paragraph. The formatting, however, is carried out for every index line. An index line in the sense of the embodiment is therefore to be understood as a formatting unit. In most cases, like in the example shown in Figure 2, however, every index line will actually be comprised of one text line. The tokens of an index line are instruction symbols defining an element of an index line. A formatting information as style templates or the like is provided by the associated attributes.

The first index line is the title "Contents" followed by the index line "Summary" with page number 5. Then there exist three index lines representing hierarchies of headings. A table of contents like that shown in Figure 2 is an example of an index, where the index lines represent a different level in a hierarchical order within the index document.

Another example is a bibliographic index which can contain a plurality of different types of information sources like books, journals, thesis, emails, www-pages and so on. Different types of index lines in this example do not represent different hierarchical levels but different types of information sources.

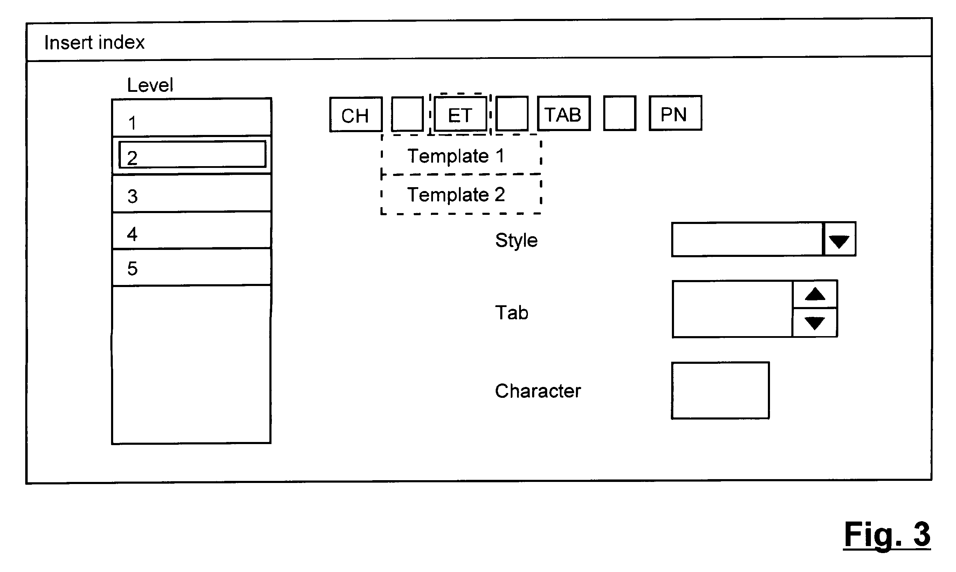

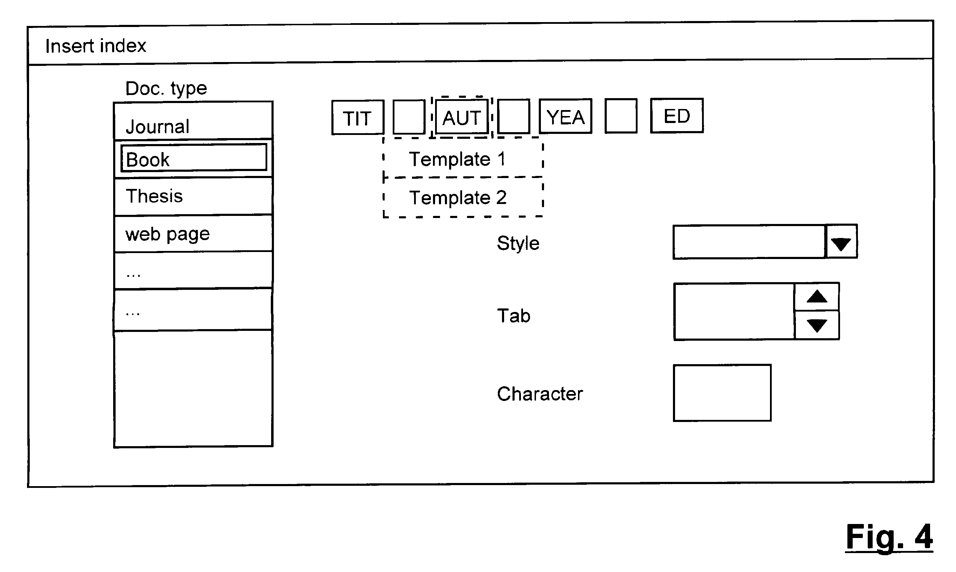

If the index type is selected in step S2 a list of possible index line types is displayed in a dialog window as shown in the examples of Figure 3 and 4. In Figure 3 the list of index line types is displayed in the list box on the left hand side under the title "Level". Figure 3 illustrates the example for creating a table of contents, as shown in Figure 2, as index document. The user can then select one of the levels. The number of levels is of course not limited to five.

Figure 4 shows the dialog window in the example of creating a bibliographic index as an index document. As index line type in the list box on the left hand side there are displayed different types of information sources under the title "doc.type", which can be selected by the user in method step S4.

Dependent on the chosen index type and a chosen index line type a token string is then displayed in the dialog window. In the example of the table of contents as shown in Figure 3, four tokens CH "chapter", ET "entry text", TAB "tabulator" and PN "page number" are displayed. By clicking the respective display field on the screen the user can then enter the corresponding content, e.g. chapter "1.1.2 " or text "fluids". The user interactive dialog further allows the assignment of attribute values as e.g. style templates for the text or distances for the tabulator. Between the display fields for the tokens there are additional fields for inserting characters, e.g. filling characters between the tokens TAB and PN (page number). The fields for inserting characters are only enabled if a character at the respective position is allowed by the instruction syntax. The selection of attributes is also restricted to valid values so that inputting of a token string having an incorrect instruction syntax is not possible.

The token string shown in the example of the bibliographic index is shown in Figure 4. As index line type the document type "book" is chosen. In the example the tokens TIT (title), AUT (author), YEA (year) and ED (editor) are displayed. The user can now input title, author, year of publication, editor etc. The displayed tokens are adapted to the chosen document type so that all necessary information can be input. In the case of a web-page, for example, it is possible to insert tokens for a hyperlink to the referenced www-page. Like in the example of Figure 3 the font templates are defined by attributes of the respective tokens.

After displaying and selecting the attributes (steps S7 and S8) of a given token the routine proceeds to step S9, in which it is determined whether or not the last token in the index line has been reached. If this is not the case the steps S6 to S8 are repeated for the next token. In the case of a affirmative result in step S9 it is checked in step S10 whether or not the last index line of the index document has been reached. If not the method returns to step S4. In the opposite case the creation of the index document is completed and the index may be assigned to the desired document, for example a text document currently opened in the computer.

The invention, however, is not restricted to the generation of index documents. Other types of instruction sets may also be created by the present invention. An example for such an instruction set is an instruction string containing AT-commands for a modem interface.

The interactive editing of the instruction set speeds up the generation or editing of the instruction set. In the case of a bibliographic index, for example, the user may enter a short name for a field like the author. If a corresponding entry does not exist in the bibliographic index the user can then click on a button to create a new entry for the bibliography. The interactive entry of instruction symbols and variables furthermore can avoid the entry of a not permitted instruction language.

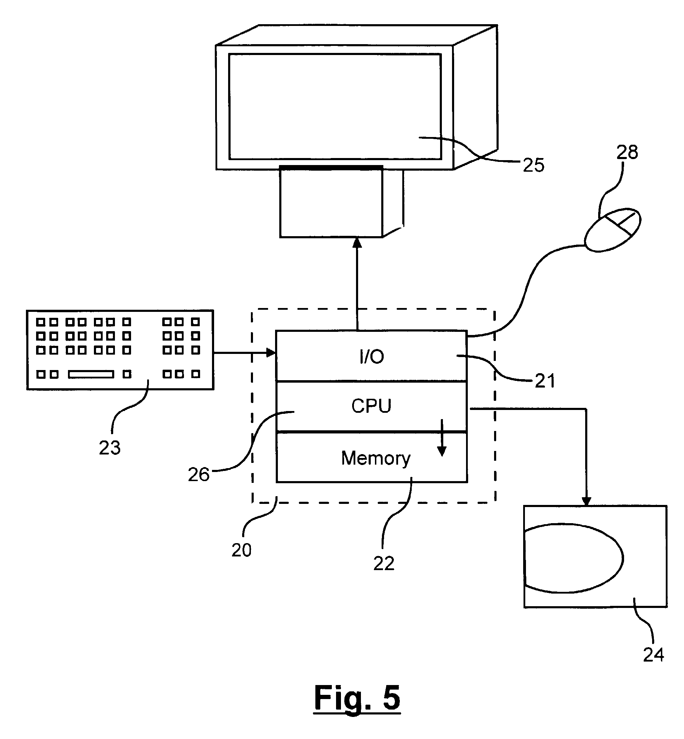

The present invention is applicable to a hardware configuration like a personal computer or work station as illustrated schematically in Figure 5. The computer may comprise a central processing unit CPU 26, an input output I/O unit 21, an internal memory 22 and an external memory 24. The computer further comprises standard input devices like a keyboard 23, a mouse 28 or speech processing means (not illustrated).

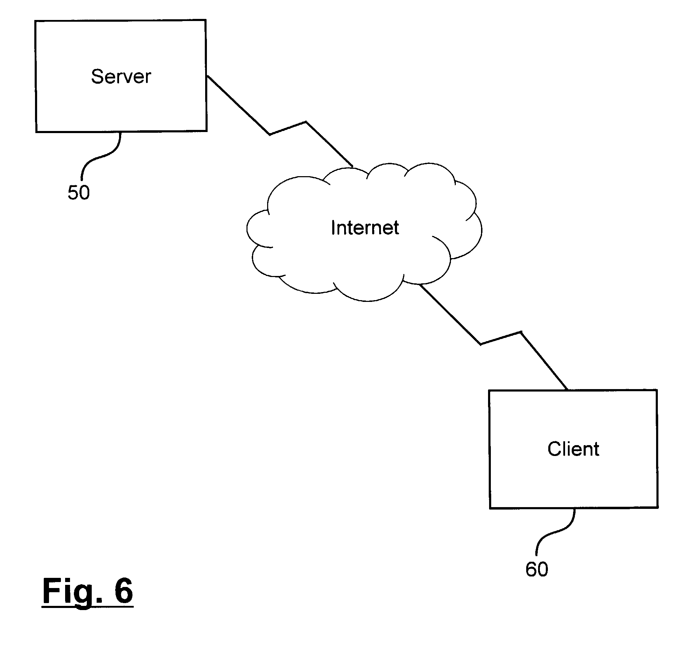

The invention, however, may also be applied to a client-server configuration as illustrated in Figure 6. The lists of selectable symbols and variables may be displayed on a display screen of a client device 60 while some or all steps of the method as illustrated before in Figures 1 to 4 are carried out on a server computer 50 accessible by the client device 60 over a data network as the internet using a browser application or the like.

While the invention has been particularly shown with reference to a preferred embodiment thereof, it will be understood by those skilled in the art that various other changes in the form and details may be made therein without departing from the spirit and scope of the invention.

## Claims

1. A method of interactively generating a computer readable instruction set comprising instruction symbols and related variables, the method comprising:
a) generating a signal for displaying a list of selectable instruction symbols,
b) arranging a selected instruction symbol to form part of the instruction set,
c) generating a signal for displaying a list of selectable variable values, if at least one variable relates to the selected instruction symbol,
d) arranging a selected variable value to form part of the instruction set,
e) repeating steps a) to d) until the instruction set is completed.

2. The method of claim 1, wherein the instruction set defines a formatted index document (100).

3. The method of claim 2, wherein the index document (100) comprises a plurality of index lines, the method comprising the steps of:
selecting an index type out of a predetermined list of index types,
selecting an index line type out of a predetermined list of index line types dependent on the selected index type,
providing for every index line a string of instruction symbols dependent on a selected index type and index line type,
selecting, for every instruction symbol to which an attribute is assigned, an attribute value out of a predetermined list of attribute values.

4. The method of claim 3, wherein the index line types represent different levels in a hierarchical order within the index document.

5. The method of claim 4, wherein the list of index types includes a table of contents, an illustration index, an object index or a table index.

6. The method of claim 3, wherein the list of index types includes a bibliographic index and different index line types represent different sources of bibliographic information.

7. The method of claim 3, wherein the attributes include style templates and tabulator positions.

8. The method of claim 1, wherein the set of instruction symbols represents a link to another document.

9. The method of claim 2, wherein the index document (100) is assigned to a document presently opened in a computer or a defined portion thereof.

10. A computer program for interactively generating a computer readable instruction set comprising instruction symbols and related variables, the computer program comprising program code for:
a) generating a signal for displaying a list of selectable instruction symbols,
b) arranging a selected instruction symbol to form part of the instruction set,
c) generating a signal for displaying a list of selectable variable values, if at least one variable relates to the selected instruction symbol,
d) arranging a selected variable value to form part of the instruction set,
e) repeating steps a) to d) until the instruction set is completed.

11. The computer program of claim 10, wherein the instruction set defines a formatted index document (100).

12. The computer program of claim 11 wherein the index document (100) comprises a plurality of index lines, the program comprising program code adapted for:
selecting an index type out of a predetermined list of index types,
selecting an index line type out of a predetermined list of index line types dependent on the selected index type,
providing for every index line a string of instruction symbols dependent on a selected index type and index line type,
selecting, for every instruction symbol to which an attribute is assigned, an attribute value out of a predetermined list of attribute values.

13. The computer program of claim 12, wherein the index line types represent different levels in a hierarchical order within the index document.

14. The computer program of claim 12, wherein the attributes include style templates and tabulator positions.

15. The computer program of claim 10, wherein a set of instruction symbols represents a link to another document.

16. The computer program of claim 11, wherein the index document is assigned to a document presently opened in the computer or a defined portion thereof.

17. A computer program product for interactively generating a computer readable instruction set comprising instruction symbols and related variables, the computer program comprising program code adapted for:
a) generating a signal for displaying a list of selectable instruction symbols,
b) arranging a selected instruction symbol to form part of the instruction set,
c) generating a signal for displaying a list of selectable variable values, if at least one variable relates to the selected instruction symbol,
d) arranging a selected variable value to form part of the instruction set,
e) repeating steps a) to d) until the instruction set is completed.

18. The computer program product of claim 17, wherein the instruction set defines a formatted index document (100).

19. The computer program product of claim 18 wherein the index document (100) comprises a plurality of index lines, the program comprising program code adapted for:
selecting an index type out of a predetermined list of index types,
selecting an index line type out of a predetermined list of index line types dependent on the selected index type,
providing for every index line a string of instruction symbols dependent on a selected index type and index line type,
selecting, for every instruction symbol to which an attribute is assigned, an attribute value out of a predetermined list of attribute values.

20. The computer program product of claim 17, wherein a set of instruction symbols within an index line represents a link to another document.

21. The computer program product of claim 18, wherein the index document is assigned to a document presently opened in a computer or a defined portion thereof.

22. An apparatus for interactively generating a computer readable instruction set comprising instruction symbols and related variables, the apparatus comprising:
a unit (26) for generating display signals for displaying a list of selectable instruction symbols,
a unit (26) for generating display signals for displaying a list of selectable variable values corresponding to instruction symbols to which at least one variable is assigned,
a processing unit (26) for arranging a plurality of selected instruction symbols and selected variable values such as to form the instruction set having a valid instruction syntax.

23. The apparatus of claim 22, wherein the instruction set defines a formatted index document.
